# EUROPÄISCHE PATENTSCHRIFT

(11) **EP 0 512 143 B1**
(45) Veröffentlichungstag und Bekanntmachung des Hinweises auf die Patenterteilung: **25.09.1996**
(21) Anmeldenummer: 91107515.8
(22) Anmeldetag: 08.05.1991
(51) Int. Cl.: H04L 12/56

(54) **Steuerungsanordnung für ein Breitbandvermittlungssystem**
Control arrangement for a broad band switching system
Agencement de commande pour un système de commutation à large bande

(43) Veröffentlichungstag der Anmeldung: 11.11.1992
(73) Patentinhaber: SIEMENS AKTIENGESELLSCHAFT, 80333 München (DE)
(72) Erfinder: Storm, Jürgen, Ing.-grad., W-8039 Puchheim (DE)

(56) Entgegenhaltungen:
- EP-A- 0 016 426
- WO-A-84/00267

## Beschreibung

In elektronisch gesteuerten Vermittlungssystemen wird häufig eine bestimmte Anzahl von Teilnehmeranschlußleitungen oder Verbindungsleitungen zu einer Gruppe zusammengefaßt und von einem sogenannten Gruppenprozessor gesteuert. Die benötigte Gruppenprozessorleistung ist in etwa proportional zur Anzahl der Teilnehmeranschlußleitungen bzw. Verbindungsleitungen und läßt sich aus Erfahrungswerten (z.B. Anzahl der Verbindungsversuche pro Zeiteinheit und Teilnehmer) berechnen.

Aus dem Dokument EP-A-O 016 426 ist beispielsweise ein Vermittlungssystem gemäß dem Oberbegriff des Anspruchs 1 bekannt.

Bei Breitbandvermittlungssystemen, insbesondere ATM-Vermittlungssystemen mit stark unterschiedlichen Bitraten pro Verbindung besteht keine feste Beziehung mehr zwischen der Anzahl der Anschlüsse und der hierzu benötigten Gruppenprozessorleistung. Es könnten z.B. über eine 155-Mbit-s-Teilnehmerleitung nur eine Breitband- Verbindung pro Stunde und über eine andere solche Teilnehmerleitung hingegen viele Tausend Sprechverbindungen/Stunde aufgebaut werden, d.h. die pro Anschluß (Port) benötigte Gruppenprozessorleistung kann um mehr als drei Größenordnungen schwanken.

Der Erfindung liegt das Problem zugrunde, die optimale Steuerungs- bzw. Vermittlungsleistungsfähigkeit eines Vermittlungssystems auch bei sich ändernden Verkehrskenngrößen im Anschlußbereich zu erhalten.

Dieses Problem wird erfindungsgemäß durch die Merkmale des Anspruchs 1 gelöst.

Durch die flexible Zuordnung der Anschlußgruppen während des Betriebs des Vermittlungssystems ist es bei einer Abweichung des bei der Planung einer Vermittlungsstelle erwarteten Bedarfs an Steuerleistung von der tatsächlich benötigten Steuerleistung möglich, neue Gruppenprozessoren hinzuzufügen, ohne den laufenden Betrieb der Vermittlungsstelle zu stören. Aus demselben Grund braucht bei der Planung einer Vermittlungsstelle nur der gegenwärtige Bedarf an Steuerleistung berücksichtigt werden, d.h. es brauchen nur so wenig Gruppenprozessoren verwendet werden wie zum Zeitpunkt der Inbetriebnahme der Vermittlungsstelle nötig sind.
Ein weiterer Vorteil der Erfindung besteht darin, daß auch bei sich ändernden Verkehrskenngrößen eine gleichmäßige Lastverteilung zwischen den Gruppenprozessoren erreicht werden kann.

Ein weiterer Vorteil der Erfindung besteht darin, daß ein im Fehlerfall nur noch ungedoppelt laufender Gruppenprozessor entweder durch einen Reserve-Gruppenprozessor ersetzt werden kann oder die intakten Gruppenprozessoren die Steuerlast und deren Daten vom ungedoppelt laufenden Gruppenprozessor übernehmen können.

Das Vermittlungssystem nach Anspruch 2 besitzt insbesondere den Vorteil, das für die Kommunikationsbeziehung zwischen dem Anschlußprozessor einer Anschlußbaugruppe und dem dieser Anschlußbaugruppe zugeordneten Gruppenprozessor keine gesonderte Koppeleinrichtung benötigt wird.

Das Vermittlungssystem nach Anspruch 3 besitzt insbesondere den Vorteil, daß die genannte Zuordnung durch den Betreiber des Vermittlungssystems der MML-Kommandos besonders einfach realisierbar ist.

Das Vermittlungssystem nach Anspruch 4 besitzt insbesondere den Vorteil, daß der Betreiber des Vermittlungssystems entlastet wird und eine schnellere Anpassung des Vermittlungssystems bei sich ändernden Verkehrskenngrößen im Anschlußbereich erreicht wird.

Im folgenden wird die Erfindung anhand eines Ausführungsbeispiels näher erläutert.

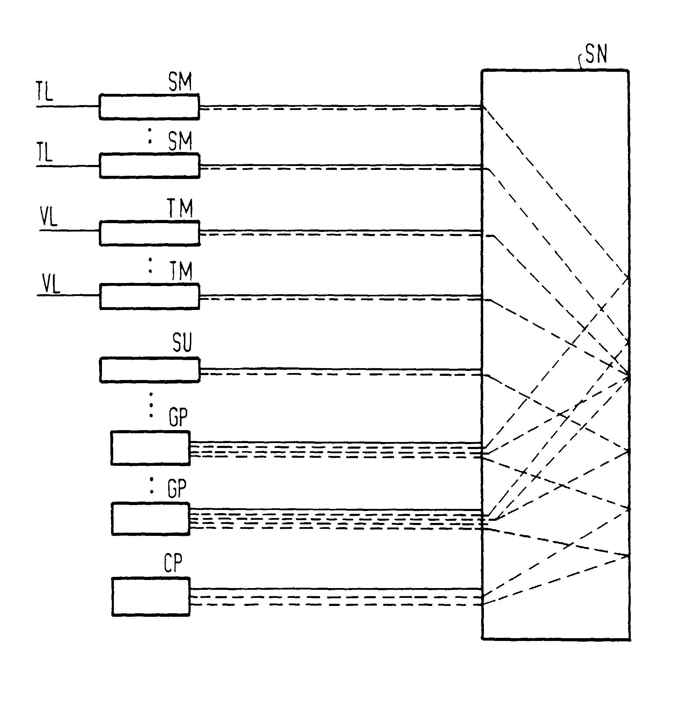

Die Figur zeigt ein spezielles erfindungsgemäßes ATM-Vermittlungssystem, das ein ATM-Koppelnetz SN, Teilnehmeranschlußbaugruppen SM zum Anschluß von Teilnehmerleitungen TL, Verbindungsanschlußbaugruppen TM zum Anschluß von Verbindungsleitungen VL, Service-Baugruppen SU zur Bereitstellung besonderer Einrichtungen (z. B. Konferenzschaltungen), Gruppenprozessoren GP, sowie einen Koordinationsprozessor CP umfaßt.

Bei dem ATM-Koppelnetz handelt es sich um ein selbststeuerndes Koppelnetz, bei dem jede zu vermittelnde ATM-Zelle in ihrem sogenannten Kopf eine Verbindungsnummer (Identifikation der virtuellen Verbindung) und eine Adresse des Koppelnetzausgangs, zu dem sie vermittelt wird enthält.

Die Anschlußbaugruppen SM und TM, Servicebaugruppen, Gruppenprozessoren und Koordinationsprozessoren sind einzeln oder in Gruppen (z.B. über einen Multiplexer), aber konstruktiv unabhängig voneinander an das Koppelnetz angeschlossen. Die Zuordnung einer Anzahl von Anschlußbaugruppen bzw. Servicebaugruppen zu einem Gruppenprozessor erfolgt durch die administrative Software im Koordinationsprozessor und kann bei Bedarf (z.B. Änderung der Verkehrskenngrößen einer Anschlußbaugruppe) während des Betriebs des Vermittlungssystems geändert werden.

Die genannte Zuordnung erfolgt dadurch, daß jeweils eine virtuelle Verbindung vom Gruppenprozessor zu allen von ihm zu steuernden Anschlußbaugruppen geschaltet wird und die den Anschlußbaugruppen zugeordneten Daten (Typ des Anschlusses, Teilnehmerberechtigungen, usw.) vom Koordinationsprozessor in den Gruppenprozessor geladen werden. Ferner legt jeder Gruppenprozessor pro Anschluß transiente Daten an (z. B. Frei-/-Belegtzustände).

Die für die Ausführung der Zuordnung notwendige Kommunikation zwischen Gruppenprozessor und zugeordneten Anschlußprozessoren (z.B. für Einstellbefehle oder Diagnose) in den Anschlußbaugruppen erfolgt über die genannten virtuellen Verbindungen durch das gleiche Koppelnetz, das auch die Nutzverbindungen schaltet. Die genannten virtuellen Verbindungen sind in der Figur durch gestrichelte Linien dargestellt.

Im folgenden wird der Ablauf bei einer Änderung der Zuordnung von Anschlußbaugruppen bzw. Servicebaugruppen zu einem Gruppenprozessor näher erklärt.

Zunächst wird der Koordinationsprozessor entweder durch ein MML- Kommando des Betreibers oder durch seine eigene administrative Software darüber informiert, daß aufgrund sich geänderter Verkehrskenngrößen im Anschlußbereich eine Änderung der Zuordnung von Anschlußbaugruppen zu einem ersten Gruppenprozessor notwendig ist, z.B. weil die Vermittlungskapazität des ersten Gruppenprozessors für die erhöhte Verbindungsrate in seinem Steuerungsbereich nicht mehr ausreicht. Daraufhin wird ein zweiter Gruppenprozessor ausgewählt, der aufgrund seiner geringen Auslastung in der Lage ist, die Steuerung von bestimmten Anschlußbaugruppen, die bisher durch den ersten Gruppenprozessor gesteuert wurden, zu übernehmen.

Die eigentliche Übernahme der Steuerung kann in einfacher Weise durch Inkaufnahme eines Verlusts bestehender Verbindungen durchgeführt werden oder in aufwendigerer Weise ohne bestehende Verbindungen auszulösen. Im ersten Fall werden die betroffenen Anschlußbaugruppen zunächst durch den ersten Gruppenprozessor in üblicher Weise außer Betrieb genommen, um daraufhin durch den zweiten Gruppenprozessor wieder in Betrieb genommen zu werden. Im zweiten Fall muß vor der eigentlichen Übernahme der Steuerung durch den zweiten Gruppenprozessor eine Übergabe sämtlicher transienter und semipermanenter Daten der betroffenen Anschlußbaugruppen vom ersten Gruppenprozessor zum zweiten Gruppenprozessor erfolgen. Im ersten Fall muß die Änderung der Zuordnung zu Zeiten eines allgemein niedrigen Verkehrsaufkommens erfolgen, um möglichst wenige Verbindungen auslösen zu müssen.

Die Zuordnung der Anschlußbaugruppen zu den Gruppenprozessoren richtet sich wie erwähnt nach den Verkehrskenngrößen im Anschlußbereich der Teilnehmer- und Verbindungsleitungen.

Die Verkehrskenngröße einer Anschlußbaugruppe kann z. B. im einfachsten Fall durch Zählung der Anzahl der Verbindungsaufbauten pro Zeiteinheit bestimmt werden, oder - aufwendiger aber genauer - durch die Messung der pro Anschlußbaugruppe und Zeiteinheit benötigten Prozessorzeit festgelegt werden. Die letztgenannte Methode berücksichtigt somit unterschiedliche Teilnehmertypen (Analogteilnehmer, ISDN-Teilnehmer) sowie unterschiedliche Teilnehmerleistungsmerkmale (Kurzrufnummern, Anrufumlenkung usw.).

Anhand der Verkehrskenngrößen wird der Bedarf an Vermittlungskapazität pro Anschlußbaugruppe ermittelt und als Kriterium für die optimale Zuordnung der Anschlußbaugruppen zu den Gruppenprozessoren (optimale Lastverteilung zwischen den Gruppenprozessoren) herangezogen.

Wegen der geschilderten flexiblen Zuordnung der Anschlußbaugruppen zu den Gruppenprozessoren und der konstruktiven Trennung zwischen Gruppenprozessoren und Anschlußbaugruppen ist es außerdem möglich, die Vermittlungskapazität des gesamten Vermittlungssystems durch Zufügen weiterer Gruppenprozessoren während des Betriebs des Vermittlungssystems entsprechend zu erhöhen.

Jeder Gruppenprozessor GP ist üblicherweise in sich redundant, d.h. als Doppelsystem vorhanden, so daß bei Ausfall eines einzelnen Prozessors keine Daten und keine Verbindungen verloren gehen. Um die Gefahr eines Totalausfalls eines solchen Doppelsystems zu reduzieren kann z. B. ein nur noch ungedoppelt laufender Gruppenprozessor durch ein Reserve-Doppelsystem ersetzt werden. Eine andere Möglichkeit besteht darin, daß die intakten Doppelsysteme zu gleichen Teilen die Last (Anschlußbaugruppen, Service-Baugruppen) und die zugehörigen Daten vom ungedoppelten Gruppenprozessor übernehmen.

## Patentansprüche

1. Vermittlungssystem, insbesondere Breitbandvermittlungssystem, das folgende Baugruppen beinhaltet:
a) Anschlußbaugruppen (TM, SM) zum Anschluß von Teilnehmerleitungen (TL) oder Verbindungsleitungen (VL) an das Vermittlungssystem,
b) Gruppenprozessoren (GP) zur Steuerung des Vermittlungssystems, insbesondere der Anschlußbaugruppen (TM, SM),
c) ein Koppelnetz (SN), an das die Anschlußbaugruppen (TM, SM), und Gruppenprozessoren (GP) angeschlossen sind,
**dadurch gekennzeichnet**, daß
d) die Gruppenprozessoren (GP) von den Anschlußbaugruppen (TM, SM) konstruktiv unabhängig an das Koppelnetz (SN) angeschlossen sind,
e) wenigstens eine Anschlußbaugruppe (TM, SM) jeweils einem Gruppenprozessor (GP) zugeordnet ist,
f) die genannte Zuordnung während des Betriebs des Vermittlungssystems veränderbar ist.

2. Vermittlungssystem nach Anspruch 1,
**dadurch gekennzeichnet**,
daß die Kommunikationsbeziehung zwischen einem Gruppenprozessor (GP) und einem diesem Gruppenprozessor (GP) zugeordneten baugruppenindividuellen Anschlußprozessor einer Anschlußbaugruppe (TM, SM) über das genannte Koppelnetz (SN) hergestellt wird.

3. Vermittlungssystem nach Anspruch 2,
**dadurch gekennzeichnet,**
daß die Zuordnung der Anschlußbaugruppen (TM, SM) zu den Gruppenprozessoren (GP) durch den Betreiber des Vermittlungssystems per Software-Kommandos veränderbar ist.

4. Vermittlungssystem nach Anspruch 2,
**dadurch gekennzeichnet,**
daß die Zuordnung der Anschlußbaugruppen (TM, SM) zu den Gruppenprozessoren (GP) automatisch in Abhängigkeit von durch das Vermittlungssystem selbst ermittelten Verkehrskenngrößen der Anschlußbaugruppen (TM, SM) veränderbar ist.

## Claims

1. Switching system, in particular a broadband switching system, which contains the following assemblies:
a) connection assemblies (TM, SM) for the connection of subscriber lines (TL) or connecting lines (VL) to the switching system,
b) group processors (GP) for controlling the switching system, in particular the connection assemblies (TM, SM),
c) a coupling network (SN) to which the connection assemblies (TM, SM) and group processors (GP) are connected,
characterized in that
d) the group processors (GP) are connected in a structurally independent manner to the coupling network (SN) by the connection assemblies (TM, SM),
e) at least one connection assembly (TM, SM) is assigned to in each case one group processor (GP),
f) the said assignment can be varied during the operation of the switching system.

2. Switching system according to Claim 1, characterized in that the communications relationship between a group processor (GP) and an assembly-specific connection processor, which is assigned to this group processor (GP), of a connection assembly (TM, SM) is produced via the said coupling network (SN).

3. Switching system according to Claim 2, characterized in that the assignment of the connection assemblies (TM, SM) to the group processors (GP) can be varied by the operator of the switching system, by software commands.

4. Switching system according to Claim 2, characterized in that the assignment of the connection assemblies (TM, SM) to the group processors (GP) can be varied automatically as a function of traffic characteristics of the connection assemblies (TM, SM), which traffic characteristics are determined by the switching system itself.

## Revendications

1. Système de commutation, notamment système de commutation large bande, qui comprend les modules suivants :
a) des modules (TM, SM) pour le raccordement de lignes (TL) d'abonnés ou de lignes (VL) de jonction au système de commutation,
b) des processeurs (GP) de groupe pour la commande du système de commutation, notamment des modules (TM, SM) de raccordement,
c) un réseau (SN) de connexion, auquel sont connectés les modules (TM, SM) de raccordement et les processeurs (GP) de groupe,
caractérisé en ce que
d) les processeurs (GP) de groupe sont connectés au réseau (SN) de connexion indépendamment, par construction, des modules (TM, SM) de raccordement,
e) au moins un module (TM, SM) de raccordement est associé à un processeur (GP) de groupe,
f) ladite association peut être modifiée pendant le fonctionnement du système de commutation.

2. Système de commutation suivant la revendication 1,
caractérisé en ce que
la relation de communication entre un processeur (GP) de groupe et un processeur de raccordement, associé à ce processeur (GP) de groupe et propre à un module, d'un module (TM, SM) de raccordement est établie par l'intermédiaire dudit réseau (SN) de connexion.

3. Système de commutation suivant la revendication 2,
caractérisé en ce que
l'association des modules (TM, SM) de raccordement aux processeurs (GP) de groupe peut être modifiée par l'exploitant du système de commutation par des instructions de logiciel.

4. Système de commutation suivant la revendication 2,
caractérisé en ce que
l'association des modules (TM, SM) de raccordement aux processeurs (GP) de groupe peut être modifiée automatiquement en fonction de grandeurs caractéristiques de trafic des modules (TM, SM) de raccordement déterminées par le système de commutation lui-même.
